# FASCICULE DE BREVET EUROPEEN

(11) **EP 0 760 982 B1**
(45) Date de publication et mention de la délivrance du brevet: **20.03.2002**
(21) Numéro de dépôt: 95920983.4
(22) Date de dépôt: 24.05.1995
(51) Int. Cl.: G06F 17/60, G06F 1/00

(54) **LOCATION SECURISEE DE LOGICIELS PAR CARTE A MEMOIRE**
GESICHERTE VERMIETUNG VON PROGRAMMEN MIT HILFE EINER SPEICHERKARTE
PROTECTED SOFTWARE RENTAL USING SMART CARDS

(30) Priorité: 25.05.1994 FR 9406328
(43) Date de publication de la demande: 12.03.1997
(73) Titulaire: Lorphelin, Vincent, 75017 Paris (FR)
(72) Inventeur: Lorphelin, Vincent, 75017 Paris (FR)
(74) Mandataire: Plaçais, Jean-Yves
(86) Numéro de dépôt international: FR9500680
(87) Numéro de publication internationale: WO9532479

(56) Documents cités:
- EP-A- 0 089 876
- EP-A- 0 265 183
- EP-A- 0 430 734
- WO-A-85/02696
- WO-A-93/24906
- SYSTEMS AND COMPUTERS IN JAPAN, vol. 19, no. 5, Mai 1988 SCRIPTA TECHNICA, US, pages 50-60, TASHIRO S ET AL 'Implementation of a Small-Scale Prototype for Software Service System (SSS)'

## Description

La présente invention concerne la location de moyens informatiques (logiciel et/ou matériel), suivant un barème fonction de l'utilisation effective de cet ensemble.

Ce barème peut être établi à partir de différentes mesures comme la durée de mise à disposition d'un logiciel, le temps d'utilisation de ce logiciel, le nombre de transactions effectuées ou de dossiers créés, le nombre et la qualité (difficulté ou rareté) de calculs, le nombre et la qualité de fichiers consultés, notamment, et plus généralement de tout service informatique ou téléinformatique mis à disposition d'un utilisateur, et dont l'exploitation est assurée au moins en partie par ledit logiciel.

D'assez nombreuses propositions ont déjà été faites, pour assurer la protection du fournisseur (ou concepteur) d'un logiciel, notamment: EP-A-0 430 734; IEICE transactions, vol E 73, N°7, Juillet 1990, JP, pp 1133-1146; EP-A-0 265 183.

Ainsi, il est connu de prévoir un dispositif informatique, du type comportant:
- un ensemble opératoire, comprenant au moins une unité centrale, avec des moyens de mémoire lui permettant de charger un système d'exploitation et de mettre en oeuvre au moins un logiciel sur la base de ce système d'exploitation, et avec au moins une interface de connexion, accessible par une fonction du système d'exploitation, et
- une unité spécialisée comportant un lecteur de support de mémoire amovible, tel qu'une carte à mémoire, connecté à l'unité centrale par ladite interface de connexion de celle-ci,
- tandis que le logiciel comporte des appels spécifiques à l'unité spécialisée, aux fins de conditionner la poursuite de l'exécution dudit logiciel, en fonction de l'état de certaines données contenues dans l'unité amovible.

Les appels spécifiques sont agencés sous forme de commandes de communication, possédant des arguments d'émission, et dont l'état d'achèvement est suspendu à l'attente d'une réponse de forme particulière.

L'unité amovible comprend:
- un module de sécurité de communication qui décode à l'aide de clés secrêtes une commande de communication provenant de l'unité centrale, en fonction de premières conditions faisant intervenir l'expression de la commande de communication, et des informations contenues dans l'unité amovible, et
- au moins un module responsif qui reconnaît une telle commande de communication, et ne lui donne de réponse favorable, sous ladite forme particulière, que si sont respectées de secondes conditions portant sur les arguments de ladite commande, et sur des informations contenues dans l'unité amovible.

C'est ce que fait EP-A-0 430 734, avec l'idée que le logiciel envoie dans la carte à mémoire des résultats, qu'il devra pouvoir y retrouver par la suite, faute de quoi le logiciel ne peut être complètement exécuté.

Ces solutions connues ne sont pas entièrement satisfaisantes au plan de la sécurité, remarque étant faite qu'un système de sécurité parfait est inconcevable.

L'invention vise donc tout d'abord à améliorer la sécurité, quant à la protection d'un logiciel contre un usage non autorisé de celui-ci.

L'invention vise, plus précisément, à améliorer cette sécurité d'une façon suffisante, pour que l'on puisse par exemple s'y fier pour la tarification du prix de location du logiciel, ainsi qu'on le verra plus loin.

L'invention a également pour but de fournir une solution applicable pour plusieurs locataires, plusieurs logiciels et plusieurs loueurs simultanés possibles.

Le Demandeur a constaté que les difficultés de mise en oeuvre proviennent de la manière dont sont associés les procédés de location et de protection.

L'invention part d'un dispositif informatique du type précité.

Selon un aspect de l'invention, le module de sécurité de communication, étant capable d'inhiber a priori la réponse à la commande de communication précitée, est propre à tester le flux de données entre l'unité amovible et l'unité centrale, tandis que le module responsif précité est monté en aval de cette inhibition.

Le module responsif peut être un module de décompte de consommation, tel qu'un porte-monnaie électronique et/ou un module de décompte temporel.

On peut alors prévoir que ladite réponse de forme particulière comporte un premier état, valant autorisation de fonctionnement normal du logiciel, et un second état, valant autorisation de fonctionnement tout au plus seulement en mode dégradé (fonctionnalités réduites).

D'autres caractéristiques et avantages de l'invention apparaîtront à l'examen de la description détaillée ci-après, et des dessins annexés, sur lesquels:
- les figures 1, 1A et 1B sont les schémas généraux de trois exemples d'installations dans lesquelles l'invention peut être mise en oeuvre,
- les figures 2, 2A illustrent schématiquement la partie "support amovible" de la mise en oeuvre de l'invention, et
- les figures 3 et 3A illustrent schématiquement deux versions d'un automate utilisé dans un mode de réalisation de l'invention.

S'agissant d'éléments touchant à la sécurité, on comprendra que certaines parties du dispositif ne soient décrites qu'en leur principe.

Avant de décrire l'invention en détail, il est utile de rappeler l'ensemble des solutions connues.

Certains procédés de location sont basés sur le nombre de transactions comptées entre une unité distante (placée sous le contrôle du fournisseur) et des unités locales; d'autres prix de location sont basés sur le temps passé par l'unité distante à traiter ces transactions. Dans les deux cas, la comptabilisation est effectuée par l'unité distante.

Parallèlement, on a proposé des procédés utilisant des boîtiers électroniques, qui effectuent la décrémentation d'un compteur sur commande du logiciel loué. Ces boîtiers sont en général connectés à un port de communication de l'ordinateur. Suivant les variantes, la réincrémentation du compteur se fait par saisie au clavier d'un code transmis par le loueur, ou par liaison avec un ordinateur central. Dans tous ces cas, la protection étant soit logicielle, soit de technologie passive (ROM, epROM, eepROM ou e2pROM), elle n'offre pas un niveau suffisant pour la location.

D'autres procédés proposent un boîtier électronique intégrant un microprocesseur. Comme ces boîtiers, même amovibles, ne sont pas conçus pour être fréquemment connectés et déconnectés du système, la mise en oeuvre est incompatible avec les contraintes commerciales dès que ce système est associé soit à plusieurs logiciels, soit à plusieurs locataires.

On a encore proposé des systèmes à carte à microcalculateur (microprocesseur ou logique de calcul dite câblée) contenant un compteur décrémenté en fonction du temps mesuré entre deux commandes successives du logiciel; ces commandes interviennent normalement à intervalles de temps connus. La mise en oeuvre de ce procédé nécessite d'intégrer une commande d'interruption du chronométrage lorsque ce temps est incertain. Or, cette commande d'interruption affaiblit considérablement le niveau de sécurité donné par la carte à microcalculateur.

D'autres solutions encore évoquent le moyen d'intégrer, dans le procédé, un module de protection du logiciel loué et un compteur décrémenté au fur et à mesure de l'utilisation; lorsque ce compteur arrive à épuisement, le module de protection est inhibé ce qui provoque le blocage du logiciel. Or, dans la plupart des cas, il est souhaitable que le logiciel continue à fonctionner, avec des fonctionnalités réduites (mode dégradé), en restant néanmoins protégé contre une utilisation frauduleuse.

Rien de tout cela ne donne donc véritablement satisfaction.

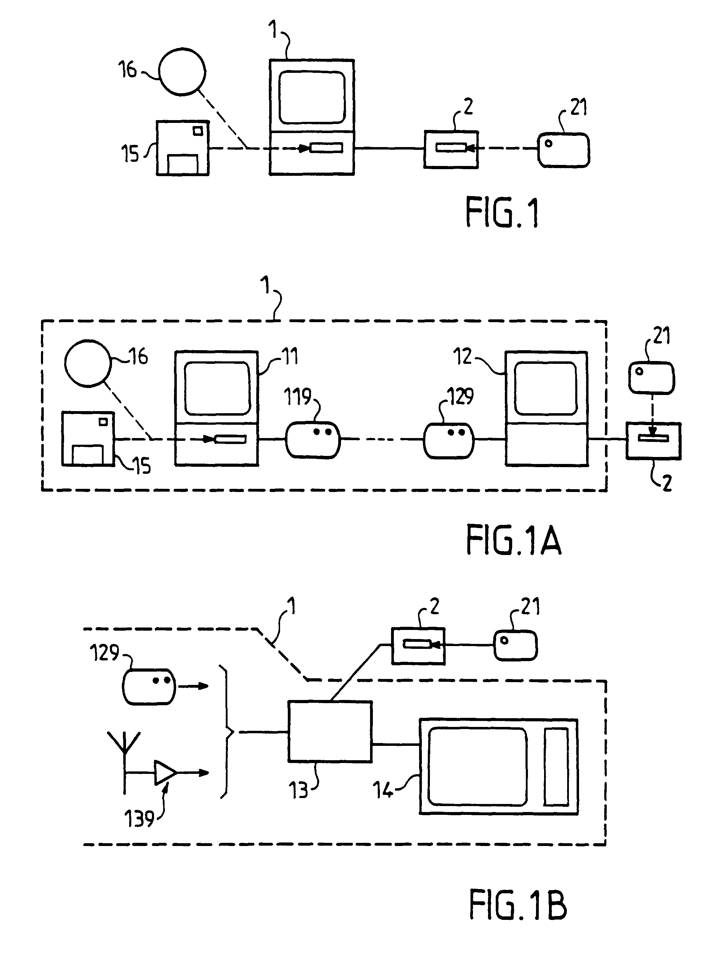

L'invention part d'un ensemble informatique comportant, sur la figure 1, au moins une unité centrale 1, à laquelle est adjointe une unité spécialisée 2. Ces deux unités peuvent communiquer entre elles, par une interface appropriée, qui peut être un port de l'unité centrale, par exemple le port série d'un microordinateur, ou encore un connecteur d'un contrôleur de périphérique monté sur une carte interne, ou sur la carte-mère.

L'unité centrale 1 est composée de matériels informatiques et/ou de logiciels et/ou de fichiers, dont une partie au moins est livrée soit sur une mémoire de masse portative du genre disquette 15, ou disque compact 16, soit comme mémoire permanente (epROM) ou sauvegardée. Cette "partie livrée" peut comprendre des fichiers, exécutables (tels que des programmes) ou non (tels que des bases de données, ou autres fichiers de données, y compris audio et/ou vidéo, par exemple).

En variante (fig 1A), une unité centrale locale 12 est reliée par modems (ou autre liaison) 129 et 119 à une unité centrale distante ou fournisseur 11, qui, en ce cas, contient, sur mémoire de masse interne ou externe, une partie au moins des logiciels et/ou fichiers utiles. Il est en principe requis qu'une - petite - partie du logiciel réside dans le poste local. En l'espèce ce seront les fonctions minimales d'interface utilisateur pour présenter les résultats du service à l'usager, et les fonctions minimales (débit) à exécuter sur la carte à mémoire.

Selon une autre variante (fig 1B), une transmission par fil aboutit au modem 129, ou bien une transmission hertzienne aboutit à l'ensemble de réception 139. La partie locale de l'ensemble informatique peut alors être fondée sur un poste à microordinateur, comme précédemment, ou bien, comme représenté, sur une unité 13 (console de jeu, par exemple) coopérant avec la partie moniteur d'un récepteur de télévision 14.

Dans ces trois modes, qui sont des exemples non limitatifs, l'unité locale 1, 12 ou 13 est reliée à l'unité spécialisée 2.

Dans la suite, on se placera pour simplifier dans le cas de la figure 1. On admettra également que l'unité spécialisée 2 est reliée à un port série de l'unité centrale 1 (bien que d'autres liaisons, notamment à un port PCMCIA, soient envisageables).

Le système d'exploitation de l'unité locale 1 fournit une fonction ou primitive d'accès au port série concerné.

Le logiciel à exécuter comporte des appels à cette primitive d'accès, pour pouvoir accéder à l'intérieur de la carte à mémoire 21.

Selon un aspect de l'invention, ces appels dits "spécifiques" sont agencés sous forme de commandes de communication, ayant des arguments d'émission, et attendant une réponse de forme particulière. Les arguments d'émission sont par exemple respectivement un identifiant et un code. L'état d'achèvement de l'appel spécifique est suspendu à l'attente de ladite réponse de forme particulière, qui va conditionner la manière dont l'exécution du logiciel se poursuivra. Bien entendu, cette suspension peut être bornée par un temps maximal d'attente, au terme duquel une réponse négative est présumée.

Ainsi, en d'autres termes, l'unité locale peut exécuter des commandes de communication avec l'unité spécialisée 2, dont les résultats autorisent ou inhibent l'exécution normale ou dégradée de cette unité locale 1.

Pour la plupart des applications, l'une de ces commandes sera du type "DECREMENTER". Elle peut être produite directement, ou bien implicitement en association avec une autre commande.

Très généralement, l'unité spécialisée 2 est composée d'au moins une partie amovible appelée carte, par exemple une carte à mémoire 21, et d'un lecteur de cartes. S'y intègrent des modules comportant des moyens de traitement capables notamment d'élaborer les résultats de communication, en fonction de leurs propres informations définies, mémorisées ou calculées au préalable.

La carte 21 comporte au moins un module de sécurité de communication 6, lequel a pour rôle de sécuriser les échanges d'information entre les unités centrale et spécialisée. Comme illustré sur le dessin par des commutations 251, ce module 6 est en mesure d'intercepter, dans l'un et/ou l'autre sens, une partie au moins des communications entre l'unité locale 1 et la carte 21, sur les lignes 203 à 207. Ceci peut se faire par différentes sortes de tests de contrôle exercés sur le flux de données qui passent. Par exemple, les données du flux peuvent être chiffrées ou signées à l'aide d'une clef déterminable à partir d'informations contenues dans la mémoire (non représentée) de la carte 21. Toute erreur de chiffrement, respectivement de signature, se traduit par l'interception du flux de données placé sous le contrôle du module 6. Il s'y ajoute de préférence une réponse d'erreur destinée à l'unité centrale 1.

Ainsi, le module 6 exerce un contrôle d'accès à un ou plusieurs autres modules dits "responsifs", parmi lesquels on a représenté un compteur de consommation 3, un module de décompte temporel 4, et un module de contrôle de séquence 5.

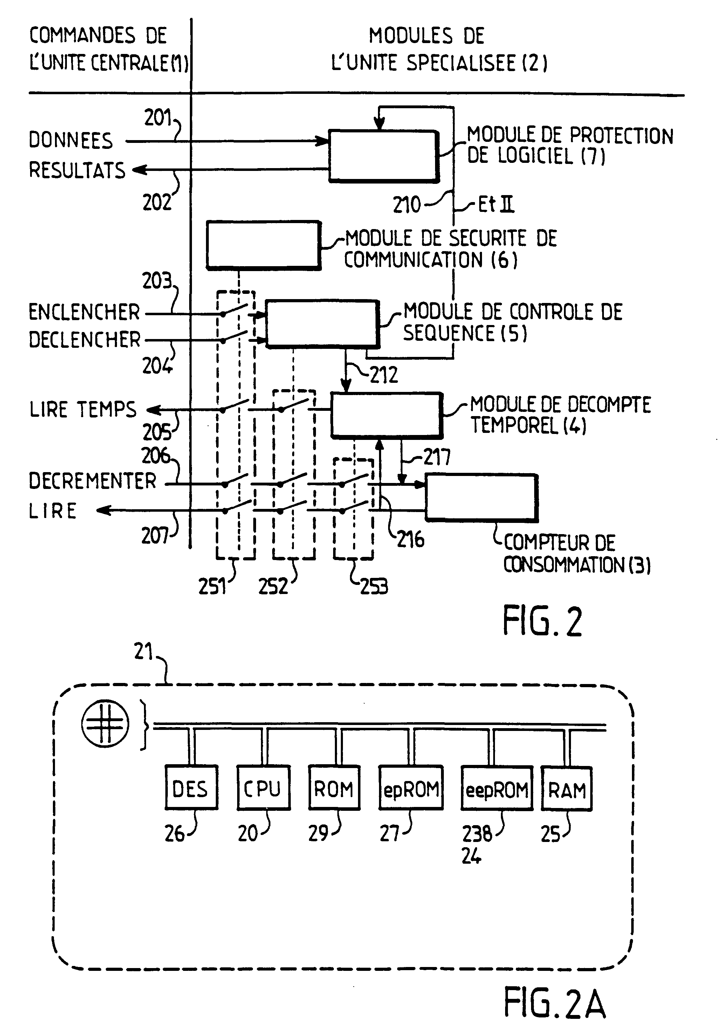

Plus généralement, cela signifie que l'on peut établir une hiérarchie dans les modules "responsifs". Un module responsif de priorité supérieure peut alors intercepter les commandes adressées à d'autres modules responsifs de priorité plus basse. L'établissement de cette hiérarchie va dépendre des applications, ce qui est illustré sur la figure 2 n'en étant qu'un exemple.

Ainsi présenté, le dispositif proposé offre une cascade de modules dont chacun conditionne l'accès aux suivants (de moindre priorité), jusqu'au niveau de priorité le plus bas, qui contient notamment les fonctions comptables liées à la location du logiciel (à quoi peuvent s'ajouter d'autres conditions), et conditionne de façon ultime la poursuite des opérations de ce logiciel.

Le compteur de consommation 3 contient à la livraison un crédit d'utilisation du logiciel qui peut être lu et/ou décrémenté par le logiciel au fur et à mesure de son utilisation, sous contrôle du module de sécurité de communication 6 et, le cas échéant, du module de contrôle de séquence 5. De préférence, toute opération de décrémentation est accompagnée d'une lecture de la nouvelle valeur du crédit.

Il peut être intéressant de prévoir qu'une commande soit interprétée par la carte comme la combinaison de cette commande, et d'une autre commande, implicite. Par exemple, une commande de DONNEES (201) peut générer implicitement dans la carte une commande DECREMENTER.

Dans un mode de réalisation particulier, on utilise la séquence d'états du module de contrôle de séquence 5. Les changements d'états sont dus à des commandes correspondantes provenant de l'unité centrale 1, sous contrôle du module de sécurité de communication 6, et/ou à des événements internes à la carte.

Deux états au moins sont nécessaires (états I et II). Mais, comme la carte est amovible, donc introductible et extractible, la séquence proposée selon l'invention est la suivante:
- introduction 308: passage à l'état I (311)
- enclenchement 309: passage à l'état II (312)
- déclenchement 310: passage à l'état III (313)
- extraction 308 et attente d'introduction.

La carte peut être extraite et réintroduite en cours de chacun des états I (311) et II (312) sans incidence sur cette séquence. Ceci suppose que l'automate du module 5 est réalisé en mémoire eepROM.

Cette séquence a notamment pour objet d'obliger un fraudeur à extraire et réintroduire la carte à mémoire dans le lecteur à chaque simulation d'enclenchement/déclenchement du module de décompte, ce qui ralentit considérablement les opérations et rend sa tâche fastidieuse.

Autrement dit, il s'agit là d'un automate bouclé à deux, de préférence trois états au moins, auxquels sont associés deux, respectivement trois transitions. L'entrée dans un état n'est permise qu'en présence de la transition associée à cet état.

L'une des transitions est l'extraction/ré-introduction de la carte. Une seconde transition est produite en présence de l'une au moins des commandes (au maximum, toutes, sauf, le cas échéant, la commande de déclenchement) venant de l'unité locale 1, et/ou sur événement interne à la carte (issu de l'un des autres modules). La troisième transition est produite soit en réponse à une commande de déclenchement, soit également sur événement interne à la carte, comme le dépassement d'une durée maximale pendant laquelle la carte n'a reçu aucune commande.

L'état intermédiaire II (attente de "déclenchement") sert alors de base pour assurer certaines fonctions dans la carte, comme le décompte temporel, qui conditionne à son tour le décompte de consommation, ou bien le commande, et aussi le contrôle de la protection du logiciel, dont on va parler ci-après.

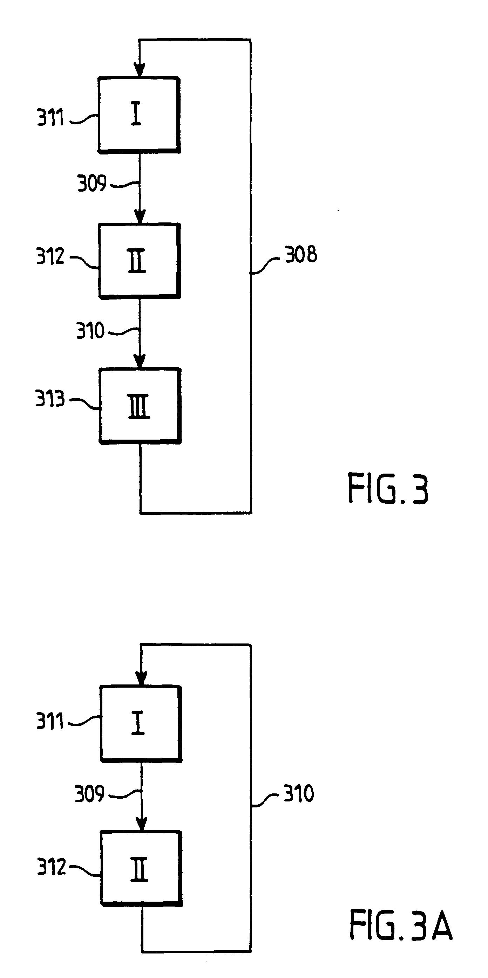

Comme l'indique la figure 3A, il est possible, pour certaines applications, de restreindre l'automate à deux états, et les deux seules transitions dites "enclenchement" 309 et "déclenchement" 310.

Bien qu'il soit envisageable de s'en passer, il est considéré actuellement que le module de contrôle de séquence 5 apporte un élément de sécurité important.

Ce module de contrôle de séquence 5 peut contenir un compteur de cycles. Ce compteur décrémente un crédit de cycles à chaque fois que l'on passe dans l'un, choisi, des états. Dans le cas de l'automate à trois états, ce compte le nombre de fois que la carte est extraite ou introduite dans le lecteur. Lorsque ce crédit est nul, toute communication contrôlée par le module de contrôle de séquence 5 est inhibée (252).

Ainsi, un fraudeur qui arriverait à mettre au point un système mécanique ou électrique pouvant simuler l'extraction et l'introduction de la carte est limité dans ses opérations par le nombre de cycles possibles, qui est relativement restreint dans le cas d'une utilisation normale.

En d'autres termes, le module de contrôle de séquence 5 vient exercer en 252 un second niveau d'interception sur les communications avec les autres modules, ici 3 et 4. On pourrait d'ailleurs considérer fonctionnellement ce module de contrôle 5 comme un constituant du module de sécurité 6.

De préférence, l'unité spécialisée comporte en outre un module de protection du logiciel 7. Les échanges de données de celui-ci avec l'unité locale 1 peuvent échapper au contrôle du module de sécurité de communication 6, notamment si ce module de protection de logiciel intègre un procédé de cryptage différent, redondant ou incompatible avec celui du module de sécurité de communication. De façon connue, ce module 7 répond à des données d'entrée 201 par des résultats 202, suivant une règle qui dépend d'informations contenues dans la carte, avec le degré de complexité désiré.

Il est avantageux (liaison 210) de rendre le module 7 actif en même temps que l'état II (312) généré par le module de contrôle de séquence 5. De cette manière, le logiciel ne peut fonctionner que si l'unité spécialisée a reçu une commande d'enclenchement, ce qui oblige l'exécution de la séquence malgré toute tentative de fraude. Comme la commande de déclenchement n'intervient pas durant l'exploitation normale du logiciel, toute tentative de simulation de ce déclenchement bloquera le fonctionnement du logiciel.

L'unité spécialisée peut encore comporter un module de décompte temporel 4, qui fait courir un chronomètre lorsque ce module est actif.

Ce module de décompte temporel 4 inhibe (253) la communication entre l'unité centrale et le compteur de consommation 3 lorsque le chronomètre atteint une valeur prédéterminée.

De préférence, le décompte temporel n'est mis en oeuvre que pendant l'état II de la séquence 5: le chronomètre n'est activé (liaison 212) que lorsque le module de contrôle de séquence 5 a reçu une demande d'enclenchement 309, c'est--à-dire lorsque le logiciel est réellement en exploitation (et non dès que l'unité spécialisée est en service).

Cette fonction a notamment pour objet de définir une "durée de péremption" de la carte, à ne pas confondre avec l'éventuelle date de péremption de cette carte, qui peut être gérée par le module de sécurité de communication 6.

La durée restante de ce module de décompte temporel 4 peut être lue (205) par l'unité centrale, sous contrôle du module de sécurité de communication 6, et, le cas échéant, du module de séquence 5.

Le module de décompte temporel 4 peut, en interne, lire (217) ou décrémenter (216) le compteur de consommation 3.

Les demandes d'enclenchement 309 et de déclenchement 310 du module de contrôle de séquence 5 peuvent être activées en interne dans l'unité spécialisée 2:
- l'enclenchement s'effectue implicitement à chaque communication avec l'unité centrale,
- le déclenchement s'effectue si aucune communication n'a eu lieu pendant un délai prédéterminé.

La figure 2A illustre un exemple de carte à mémoire applicable. Les lignes tirées du connecteur sont appliquées à une unité de traitement 20, munie d'une horloge (non représentée), et accompagnée d'une mémoire de programme 29. S'y ajoutent l'élément de cryptage 26, qui comprend l'essentiel du module 6, l'élément epROM 27, qui peut contenir des fonctions de cryptage personnalisées, l'élément e2pROM 23/24, qui comprend les fonctions des modules 3 et 4, et enfin l'élément 25 de mémoire vive, qui peut contenir l'automate de contrôle de séquence, tandis que son éventuel compteur est en eepROM, pour garder la mémoire du comptage.

Dans un premier mode de réalisation particulier, la carte à mémoire est du type COS de la société GEMPLUS:
i) cette carte peut intégrer une fonction porte-monnaie électronique, constituant le module compteur de consommation 3,
ii) le module 6 est constitué sur la base d'un algorithme de cryptage de type DES, personnalisé par un jeu secret, protégeant notamment le module 3,
iii) les commandes DECREMENTER et LIRE sont de la forme:
   DECREMENTER(Identifiant, Clé_session,N°_transaction,-Montant_débit),
   LIRE(Identifiant,Clé_session,N°_transaction),
iv) la réponse attendue est un certificat qui sera une fonction cryptée des données précédentes,
v) les modules 4 et 5 sont réalisés par le développement d'instructions en eepROM ou epROM, ce que les techniciens appellent "masque spécifique". Pour le module 5, il s'agit de réaliser l'automate approprié à la séquence décrite; la fonction du module 4 est techniquement semblable à celle du module 3, sans ordre externe de décrémentation, avec usage de l'horloge du microprocesseur de la carte,
viii) le module de protection de logiciel 7 peut être réalisé de toute manière appropriée connue, par exemple avec l'algorithme DES de la carte, pour déchiffrer certaines parties des commandes, chiffrées auparavant en mode ECB.

Dans un second mode de réalisation particulier, où les fonctions des modules 4 et 5 ne sont pas implémentées, la carte à mémoire est du type SCOT 30 de la société BULL CP8. La mise en oeuvre est la suivante:
i) pour le module 3, on définit au moins une zone mémoire, formant compteur,
ii) ce module 3 ne sera accessible que sur présentation d'un identifiant et d'un code, et contrôlés par le module de sécurité de communication 6, par rapport à leurs valeurs stockées dans la carte,
iii) les commandes DECREMENTER et LIRE sont alors de la forme:
   DECREMENTER(Identifiant,Code,Montant_débit)
   LIRE(Identifiant,Code)
iv) la réponse attendue est:
   OK(crédit_restant), ou
   NONOK(Type_d'erreur)
v) le module 7 peut utiliser l'algorithme standard DES de la carte, pour déchiffrer certaines parties des commandes, chiffrées auparavant en mode ECB.

Il est clair que la mise en oeuvre de l'invention dépend dans une certaine mesure de la technologie de la carte utilisée. Mais l'invention reste au moins partiellement applicable quelle que soit cette technologie, pourvu que la carte intègre une unité de traitement.

Ceci étant, l'expression "système d'exploitation" est ici à interpréter au sens large, et s'étend à tout ensemble de fonctions matérielles et/ou logicielles permettant de faire tourner un logiciel et d'accéder à au moins un périphérique.

L'unité spécialisée 2 peut contenir plusieurs groupes de modules, répartis dans une ou plusieurs cartes, correspondant chacun à une unité centrale, locataire, loueur, logiciel ou autre unité d'utilisation. Le mot logiciel est ici utilisé au sens large, et vise aussi bien un programme que tous fichiers ou services mis à disposition de l'usager.

A chacun de ces groupes sont affectés des arguments des commandes qui sont au moins en partie différents.

On peut prendre l'exemple de deux sociétés qui proposent un logiciel commun, mais veulent rester indépendantes l'une de l'autre. On comprend l'intérêt qu'une carte fonctionne avec deux groupes séparés de modules, mais qu'elle bloque l'utilisation du logiciel sur la demande de l'un ou l'autre de ces groupes.

En pratique, on peut utiliser une carte jetable, créditée une seule fois à sa fabrication, soit une carte rechargeable, éventuellement à distance. Par ailleurs, l'expression "unité spécialisée" implique seulement que cette unité échappe au moins partiellement au contrôle de l'unité centrale; elle n'exclut pas que l'unité spécialisée soit physiquement incorporée au boîtier de cette unité centrale.

Sur un autre plan, il est clair que l'invention pourrait également être exprimée sous forme de procédés, et qu'elle s'applique non seulement à des cartes à mémoire, mais aussi à tout type d'objet portatif susceptible de loger des fonctionnalités semblables, comme par exemple des "clés à mémoire".

## Revendications

1. Dispositif informatique, du type comportant:
- un ensemble opératoire, comprenant au moins une unité centrale (1), avec des moyens de mémoire lui permettant de charger un système d'exploitation et de mettre en oeuvre au moins un logiciel sur la base de ce système d'exploitation, et avec au moins une interface de connexion, accessible par une fonction du système d'exploitation, et
- une unité spécialisée (2) comportant une unité amovible, tel qu'une carte, connecté à l'unité centrale par ladite interface de connexion de celle-ci,
- tandis que le logiciel comporte des appels spécifiques à l'unité spécialisée, aux fins de conditionner la poursuite de l'exécution dudit logiciel, en fonction de l'état de certaines données contenues dans l'unité amovible,
les appels spécifiques étant agencés sous forme de commandes de communication, possédant des arguments d'émission, et dont l'état d'achèvement est suspendu à l'attente d'une réponse de forme particulière,
l'unité amovible comprenant :
- un module de sécurité de communication (6), propre à tester le flux de données entre l'unité amovible (2) et l'unité centrale (1), et à inhiber a priori (251) la réponse à une commande de communication provenant de l'unité centrale, en fonction de premières conditions faisant intervenir l'expression de la commande de communication, et des informations contenues dans l'unité amovible, et
- au moins un module responsif (3,4,5), monté en aval de ladite inhibition et propre à reconnaître une telle commande de communication, et à ne lui donner de réponse favorable, sous ladite forme particulière, que si sont respectées de secondes conditions portant sur les arguments de ladite commande, et sur des informations contenues dans l'unité amovible

2. Dispositif selon la revendication 1, **caractérisé en ce qu'**il comprend, comme module responsif, un module de décompte de consommation (3), tel qu'un porte-monnaie électronique.

3. Dispositif selon l'une des revendications 1 et 2, **caractérisé en ce qu'**il comprend, comme module responsif, un module de décompte temporel (4).

4. Dispositif selon l'une des revendications précédentes, **caractérisé en ce que** ladite réponse de forme particulière comporte un premier état, valant autorisation de fonctionnement normal du logiciel, et un second état, valant autorisation de fonctionnement en mode dégradé seulement.

5. Dispositif selon l'une des revendications précédentes, **caractérisé en ce que** l'unité spécialisée (2) comporte en outre un module de contrôle de séquence (5), agencé en automate séquentiel bouclé à un état parmi N, N étant égal à deux au moins, chaque état étant associé à une transition qui conditionne le passage à cet état, tandis qu'un et un seul de ces états (II), dont la transition d'entrée est définie directement ou implicitement par l'une au moins des commandes, conditionne certaines opérations dans la carte.

6. Dispositif selon la revendication 5, **caractérisé en ce que** l'automate comprend au moins trois états (311,312,313), associés à trois transitions, qui sont "extraction/introduction" (308), "enclenchement" (309) et "déclenchement" (310), lesquelles transitions sont respectivement valides lorsque ladite partie amovible est introduite après avoir été enlevée, lorsqu'une demande d'enclenchement (309) est présente, et lorsqu'une demande de déclenchement (310) est présente.

7. Dispositif selon la revendication 6, **caractérisé en ce que** lesdites demandes d'enclenchement (309) et de déclenchement (310) sont réalisées en interne dans ladite unité spécialisée (2), l'enclenchement (309) s'effectuant lorsque cette unité reçoit une commande, le déclenchement (310) s'effectuant lorsqu'aucune commande n'a été reçue pendant un délai déterminé.

8. Dispositif selon l'une des revendications 5 à 7, **caractérisé en ce que** le module de contrôle de séquence (5) comporte un compteur du nombre de passages par l'un de ses états (II), et est apte (252) à inhiber les communications avec d'autres modules responsifs lorsqu'un compte défini est atteint.

9. Dispositif selon l'une des revendications précédentes, **caractérisé en ce que** ladite unité spécialisée (2) comporte en outre un module de protection de logiciel (7), comportant des moyens de traitement capables d'élaborer une réponse (202) à une commande de communication (201) associée, réponse qui est définie à partir de données au moins en partie contenues dans l'unité amovible.

10. Dispositif selon la revendication 9, prise en combinaison avec l'une des revendications 5 à 8, **caractérisé en ce que** ledit module de protection de logiciel (7) est actif (210) en même temps que le second état (312) du module de contrôle de séquence (5).

11. Dispositif selon l'une des revendications précédentes, prise en combinaison avec la revendication 3, **caractérisé en ce que** le module de décompte temporel (4) contient un crédit de temps pouvant être lu (205) par ladite unité centrale (1), et **en ce que** ce module de décompte temporel (4) est apte à décrémenter ledit crédit de temps en fonction de commandes de communication, ainsi qu'à inhiber (253) certaines desdites commandes de communication, en particulier lorsque ledit crédit de temps est nul.

12. Dispositif selon la revendication 11, prise en combinaison avec l'une des revendications 5 à 8, **caractérisé en ce que** ledit module de décompte temporel (4) est actif (212) en même temps que le second état (312) dudit module de contrôle de séquence (5).

13. Dispositif selon l'une des revendications précédentes, **caractérisé en ce que** certaines au moins des commandes sont interprétées par l'unité spécialisée (2) comme combinant plusieurs fonctions.

14. Dispositif selon l'une des revendications précédentes, **caractérisé en ce que** ladite unité spécialisée (2) est constituée par plusieurs groupes desdits modules, affectés à des arguments des commandes qui sont au moins en partie différents.

15. Dispositif selon l'une des revendications précédentes, **caractérisé en ce que** ladite unité spécialisée (2) comporte un lecteur de carte à mémoire et que ladite unité amovible est une carte à mémoire.

## Patentansprüche

1. Datenverarbeitungsvorrichtung des Typs, der umfaßt:
- eine Funktionseinheit, umfassend wenigstens eine Zentraleinheit (1) mit Speichermitteln, die ihr ermöglichen, ein Betriebssystem zu laden und wenigstens eine Software auf der Grundlage dieses Betriebssystems auszuführen, und mit wenigstens einer Anschlußschnittstelle, auf die durch eine Funktion des Betriebssystems zugegriffen werden kann, und
- eine spezialisierte Einheit (2), die eine entnehmbare Einheit wie etwa eine Karte umfaßt, die an die Zentraleinheit über deren Anschlußschnittstelle angeschlossen ist,
- während die Software spezifische Aufrufe für die spezialisierte Einheit enthält, um den Fortgang der Ausführung der Software in Abhängigkeit vom Zustand bestimmter in der entnehmbaren Einheit enthaltenen Daten zu konditionieren,
wobei die spezifischen Aufrufe die Form von Kommunikationsbefehlen haben, die Sendeargumente besitzen und deren Endzustand außer Kraft gesetzt wird, wenn auf eine Antwort mit besonderer Form gewartet wird,
wobei die entnehmbare Einheit umfaßt:
- ein Kommunikationssicherheitsmodul (6), das dazu ausgelegt ist, den Datenfluß zwischen der entnehmbaren Einheit (2) und der Zentraleinheit (1) zu prüfen und a priori (251) die Antwort auf einen von der Zentraleinheit stammenden Kommunikationsbefehl in Abhängigkeit von ersten Bedingungen zu sperren, die den Ausdruck des Kommunikationsbefehis und Informationen, die in der entnehmbaren Einheit enthalten sind, verwenden, und
- wenigstens ein Antwortmodul (3, 4, 5), das hinter der Sperre angebracht ist und dazu ausgelegt ist, einen solchen Kommunikationsbefehl zu erkennen und ihm nur dann eine günstige Antwort in der besonderen Form zu geben, wenn zweite Bedingungen berücksichtigt werden, die sich auf die Argumente des Befehls und auf in der entnehmbaren Einheit enthaltene Informationen stützen.

2. Vorrichtung nach Anspruch 1, **dadurch gekennzeichnet, daß** sie als Antwortmodul ein Verbrauchsabrechnungsmodul (3) wie etwa eine elektronische Geldbörse umfaßt.

3. Vorrichtung nach einem der Ansprüche 1 und 2, **dadurch gekennzeichnet, daß** sie als Antwortmodul ein Zeitabrechnungsmodul (4) enthält.

4. Vorrichtung nach einem der vorhergehenden Ansprüche, **dadurch gekennzeichnet, daß** die Antwort mit besonderer Form einen ersten Zustand, der der Autorisierung des Normalbetriebs der Software dient, sowie einen zweiten Zustand, der der Autorisierung des Betriebs lediglich im eingeschränkten Modus dient, umfaßt.

5. Vorrichtung nach einem der vorhergehenden Ansprüche, **dadurch gekennzeichnet, daß** die spezialisierte Einheit (2) außerdem ein Ablaufsteuermodul (5) umfaßt, das als sequentieller Automat ausgebildet ist, der zu einem von N Zuständen geführt ist, wobei N wenigstens gleich zwei ist, wobei jeder Zustand einem Übergang zugeordnet ist, der den Durchgang zu diesem Zustand konditioniert, während einer und nur einer dieser Zustände (II), dessen Eintrittsübergang direkt oder implizit durch wenigstens einen der Befehle definiert ist, bestimmte Operationen in der Karte konditioniert.

6. Vorrichtung nach Anspruch 5, **dadurch gekennzeichnet, daß** der Automat, wenigstens drei Zustände (311, 312, 313) umfaßt, die drei Übergängen zugeordnet sind, die "Entnahme/Einführen" (308), "Einschalten" (309) und "Abschalten" (310) sind, wobei der jeweilige Übergang gültig ist, wenn das entnehmbare Teil eingeführt wird, nachdem es entnommen worden ist, bzw. wenn eine Einschaltanforderung (309) vorliegt bzw. wenn eine Abschaltanforderung (310) vorliegt.

7. Vorrichtung nach Anspruch 6, **dadurch gekennzeichnet, daß** die Einschaltanforderung (309) und die Abschaltanforderung (310) intern in der spezialisierten Einheit (2) erzeugt werden, wobei das Einschalten (309) erfolgt, wenn diese Einheit einen Befehl empfängt, während das Abschalten (310) erfolgt, wenn während einer bestimmten Verzögerungszeit kein Befehl empfangen worden ist.

8. Vorrichtung nach einem der Ansprüche 5 bis 7, **dadurch gekennzeichnet, daß** das Ablaufsteuermodul (5) einen Zähler für die Anzahl der Durchgänge durch einen seiner Zustände (II) umfaßt und die Kommunikation mit weiteren Antwortmodulen sperren kann (252), wenn ein definierter Zählstand erreicht wird.

9. Vorrichtung nach einem der vorhergehenden Ansprüche, **dadurch gekennzeichnet, daß** die spezialisierte Einheit (2) außerdem ein Software-Schutzmodul (7) umfaßt, das Verarbeitungsmittel enthält, die dazu ausgelegt sind, eine Antwort (202) auf einen zugeordneten Kommunikationsbefehl (201) auszuarbeiten, wobei die Antwort anhand von Daten definiert ist, die wenigstens teilweise in der entnehmbaren Einheit enthalten sind.

10. Vorrichtung nach Anspruch 9 in Kombination mit einem der Ansprüche 5 bis 8, **dadurch gekennzeichnet, daß** das Software-Schutzmodui (7) gleichzeitig mit dem zweiten Zustand (312) des Ablaufsteuermoduls (5) aktiv ist (210).

11. Vorrichtung nach einem der vorhergehenden Ansprüche in Kombination mit Anspruch 3, **dadurch gekennzeichnet, daß** das Zeitabrechnungsmodul (4) dazu angelget ist, einen Zeitkredit enthält, der von der Zentraleinheit (1) gelesen werden kann (205), und daß das Zeitabrechnungsmodul (4)dazu ausgelegt ist, den Zeitkredit in Abhängigkeit von Kommunikationsbefehlen zu dekrementieren und bestimmte der Kommunikationsbefehle insbesondere dann, wenn der Zeitkredit null ist, zu sperren(253).

12. Vorrichtung nach Anspruch 11, in Kombination mit einem der Ansprüche 5 bis 8, **dadurch gekennzeichnet, daß** das Zeitabrechnungsmodul (4) gleichzeitig mit dem zweiten Zustand (312) des Ablaufsteuermoduls (5) aktiv ist (212).

13. Vorrichtung nach einem der vorhergehenden Ansprüche, **dadurch gekennzeichnet, daß** wenigstens bestimmte der Befehle von der spezialisierten Einheit (2) so interpretiert werden, daß mehrere Funktionen kombiniert sind.

14. Vorrichtung nach einem der vorhergehenden Ansprüche, **dadurch gekennzeichnet, daß** die spezialisierte Einheit (2) aus mehreren Gruppen der Module gebildet ist, denen Befehlsargumente zugewiesen sind, die wenigstens teilweise verschieden sind.

15. Vorrichtung nach einem der vorhergehenden Ansprüche, **dadurch gekennzeichnet, daß** die spezialisierte Einheit (2) einen Speicherkarten-Leser umfaßt und daß die entnehmbare Einheit eine Speicherkarte ist.

## Claims

1. Computer device of the type comprising:
- an operating assembly comprising at least one central unit (1) with memory means enabling it to load an operating system and execute at least one program on the basis of this operating system, and with at least one connection interface accessible via a function of the operating system, and
- a specialist unit (2) comprising a removable unit such as a card connected to the central unit by its said connection interface,
- where the software comprises specific requests to the specialist unit in order to make the continued execution of the said program conditional upon the status of certain data contained in the removable unit,
the specific requests being arranged in the form of communication commands with issue arguments, the state of completion of which is suspended pending a response in a particular form,
the removable unit comprising:
- a secure communication module (6) able to test the flow of data between the removable unit (2) and the central unit (1) and inhibit a priori (251) the response to a communication command from the central unit as a function of first conditions leading to the expression of the communication command, and as a function of the information contained in the removable unit, and
- at least one response module (3, 4, 5) mounted before the said inhibition and able to recognise such a communication command and not give a favourable response in the said particular form unless second conditions are observed concerning the arguments of the said command and the information contained in the removable unit.

2. Device according to claim 1, **characterised in that** it comprises as a response module a consumption counting module (3) such as an electronic wallet.

3. Device according to any of claims 1 and 2, **characterised in that** as a response module it comprises a time counting module (4).

4. Device according to any of the previous claims, **characterised in that** the said response in particular form comprises a first state constituting authorisation for normal function of the program and a second state constituting authorisation for function in degraded mode only.

5. Device according to any of the previous claims **characterised in that** the specialist unit (2) also comprises a sequence control module (5) arranged as a sequential automatic unit looped to one state amongst N, where N is equal to two or less, each state being associated with a transition which sets conditions for transfer to this state, where one and only one of these states (II), entry transition for which is defined directly or implicitly by at least one of the commands, sets conditions for certain operations in the card.

6. Device according to claim 5, **characterised in that** the automatic unit comprises at least three states (311, 312, 313) associated with three transitions which are "extraction/introduction" (308), "locking" (309) and "unlocking" (310), the said transitions are valid respectively when the said removable part is introduced after having been removed, when a locking request (309) is present, and when an unlocking request (310) is present.

7. Device according to claim 6, **characterised in that** the said requests for locking (309) and unlocking (310) are produced internally in the said specialist unit (2), locking (309) being performed when this unit receives a command, unlocking (310) being performed when no command has been received for a specific period.

8. Device according to any of these claims 5 to 7, **characterised in that** the sequence control module (5) comprises a counter for the number of transitions through one of its states (II) and is able (252) to inhibit communication with the other response modules when a defined count has been reached.

9. Device according to any of the previous claims, **characterised in that** the said specialist unit (2) also comprises a software protection module (7) comprising processing means able to produce a response (202) to an associated communication command (201), a response which is defined from data at least partly contained in the removable unit.

10. Device according to claim 9 in combination with any of claims 5 to 8, **characterised in that** the said software protection module (7) is active (210) at the same time as the second state (312) of the sequence control module (5).

11. Device according to any of the previous claims in combination with claim 3, **characterised in that** the time counting module (4) contains a time credit which can be read (205) by the said central unit (1), and **in that** the time counting module (4) is able to decrement the said time credit as a function of communication commands and inhibit (253) certain of the said communication commands in particular when the said time credit is zero.

12. Device according to claim 11 in combination with any of claims 5 to 8, **characterised in that** the said time counting module (4) is active (212) at the same time as the second state (312) of the said frequency control module (5).

13. Device according to any of the previous claims, **characterised in that** at least some of the commands are interpreted by the specialist unit (2) as combining several functions.

14. Device according to any of the previous claims, **characterised in that** the said specialist unit (2) consists of several groups of the said modules allocated to arguments of commands which are at least partly different.

15. Device according to any of the previous claims, **characterised in that** the said specialist unit (2) comprises a memory card reader and that the said removable unit is a memory card reader.
